# EUROPEAN PATENT APPLICATION

(11) **EP 4 503 762 A1**
(43) Date of publication of application: **05.02.2025**
(21) Application number: 22934283.7
(22) Date of filing: 31.03.2022
(51) Int. Cl.: H04W 52/02

(54) **SIGNAL MONITORING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2022/084679
(87) International publication number: WO 2023/184446

(57) **Abstract**

Embodiments of the present invention provide a signal processing method and apparatus, a communication device, and a storage medium. The signal processing method provided by the embodiments of the present invention is executed by user equipment (LTE) comprising a first transceiver and a second transceiver, and the method comprises: when the first transceiver is turned off, monitoring a synchronization signal by the second transceiver, wherein the synchronization signal carries an area identifier (ID).

## Description

### TECHNICAL FIELD

The present disclosure relates to the technical field of wireless communication, but is not limited to the technical field of wireless communication, in particular to a signal monitoring method and apparatus, a communication device, and a storage medium.

### BACKGROUND

A low power wake up signal (LP WUS) is introduced to a communication protocol, and the LP WUS is one of power saving signals. User Equipment (UE) receives the LP WUS by using a separate low power receiver. The UE needs to use a master transceiver when processing downlink and uplink data. If the UE receives a power saving signal, and the power saving signal indicates that wake up is performed, the UE activates the master receiver to receive and process a downlink signal. If the UE does not receive the power saving signal or the power saving signal indicates that wake up is not performed, the UE will keep the master receiver in a sleep state.

### SUMMARY

Embodiments of the present disclosure provide a signal processing method and apparatus, a communication device, and a storage medium.

A first aspect of the embodiments of the present disclosure provides a signal processing method executed by a user equipment (UE) including a first transceiver and a second transceiver, and the method includes:
in a case that the first transceiver is deactivated, monitoring a synchronization signal through the second transceiver, in which the synchronization signal carries an area identification (ID).

A second aspect of the embodiments of the present disclosure provides a signal processing method executed by a first network device, and the method includes:
sending a synchronization signal, in which the synchronization signal carries an area identification (ID); and the synchronization signal is monitored by a second transceiver of a user equipment (UE).

A third aspect of the embodiments of the present disclosure provides a signal processing apparatus, including:
a monitoring module configured to, in a case that a first transceiver is deactivated, monitor a synchronization signal through a second transceiver, in which the synchronization signal carries an area ID.

A fourth aspect of the embodiments of the present disclosure provides a signal processing apparatus, including:
a first sending module configured to send a synchronization signal, in which the synchronization signal carries an area identification (ID); and the synchronization signal is monitored by a second transceiver of UE.

A fifth aspect of the embodiments of the present disclosure provides a communication device including a processor, a transceiver, a memory, and executable programs stored in the memory and capable of running on the processor, in which the processor, when executing the executable programs, implements the signal processing method provided in the aforementioned first or second aspect.

A sixth aspect of the embodiments of the present disclosure provides a computer storage medium having executable programs stored thereon; and a processor, after executing the executable programs, being capable of implementing the signal processing method provided in the aforementioned first or second aspect.

According to the technical solutions provided in the embodiments of the present disclosure, when the first transceiver of the UE is deactivated, the synchronization signal carrying the area ID may be monitored through the second transceiver, in this way, the second transceiver may determine, according to the area ID carried in the monitored synchronization signal, whether the first transceiver of the UE needs to be woken up. If the area ID carried in the synchronization signal monitored by the UE is unchanged, it indicates that the first transceiver of the UE may be still deactivated, it is unnecessary to wake up the first transceiver of the UE to receive a new power saving signal configuration, so that it is unnecessary to periodically wake up the first transceiver of the UE to monitor whether there is an updated power saving signal configuration on a network side, thus reducing the power consumption of the UE again, and prolonging the standby duration of the UE.

It should be understood that the above general description and the following detailed description are only exemplary and explanatory, and cannot limit the embodiments of the present disclosure.

### BRIEF DESCRIPTION OF THE DRAWINGS

The accompanying drawings, which are incorporated in and constitute a part of the description, illustrate embodiments consistent with the embodiments of the present disclosure and serve to explain principles of the embodiments of the present disclosure together with the description.
FIG 1 is a schematic structural diagram of a wireless communication system according to an embodiment;
FIG 2 is a schematic flowchart of a signal processing method according to an embodiment;
FIG 3 is a schematic flowchart of a signal processing method according to an embodiment;
FIG 4 is a schematic flowchart of a signal processing method according to an embodiment;
FIG 5 is a schematic flowchart of a signal processing method according to an embodiment;
FIG 6 is a schematic flowchart of a signal processing method according to an embodiment;
FIG 7 is a schematic flowchart of a signal processing method according to an embodiment;
FIG 8 is a schematic block diagram of a signal processing apparatus according to an embodiment;
FIG 9 is a schematic block diagram of a signal processing apparatus according to an embodiment;
FIG 10 is a schematic block diagram of UE according to an embodiment; and
FIG 11 is a schematic block diagram of a communication device according to an embodiment.

### DETAILED DESCRIPTION

Embodiments will be described in detail herein, examples of which are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with the present disclosure. On the contrary, they are only examples of an apparatus and a method consistent with some aspects of the embodiments of the present disclosure.

Terms used in the embodiments of the present disclosure are only intended to describe specific embodiments, rather than to limit the embodiments of the present disclosure. "A", "" and "the" in a singular form used in the present disclosure are also intended to include a plural form unless other meanings are explicitly indicated in the context otherwise. It should be further understood that term "and/or" used herein refers to and includes any or all possible combinations of one or more listed relevant items.

It should be understood that terms such as first, second and third may be adopted in the embodiments of the present disclosure to describe various kinds of information, but the information should not be limited to these terms. These terms are only used for distinguishing the same type of information from each other. For example, first information may also be referred to as second information, and similarly, the second information may also be referred to as the first information without departing from the scope of the embodiments of the present disclosure, which depends on a context, for example, the word "if" used herein may be explained as "while" or "when" or "determine... in response to".

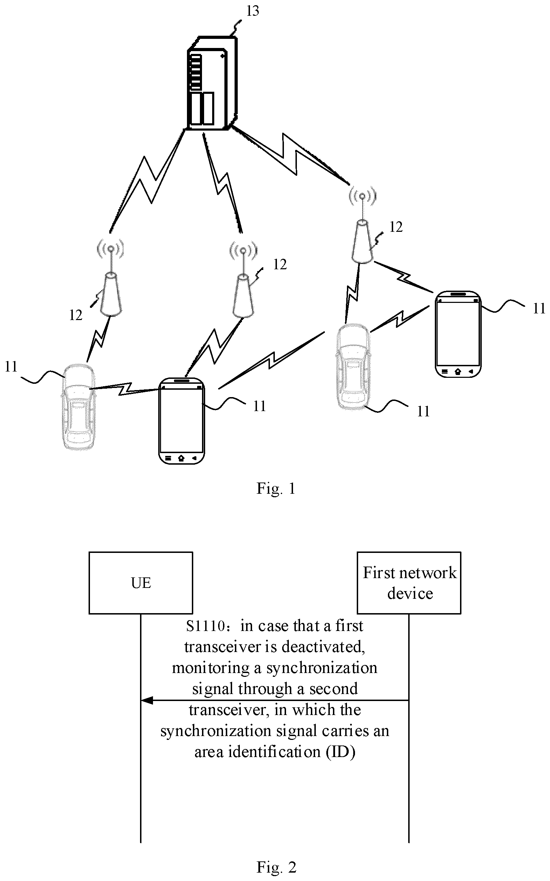

Refer to FIG 1 which shows a schematic structural diagram of a wireless communication system provided according to an embodiment of the present disclosure. As shown in FIG 1, the wireless communication system is a communication system based on a cellular mobile communication technology, and the wireless communication system may include a plurality of UEs 11 and a plurality of access devices 12.

The UE 11 may refer to a device providing voice and/or data connectivity for a user. The UE 11 may communicate with one or more core networks through a Radio Access Network (RAN), and the UE 11 may be Internet of Things UE, such as a sensor device, a mobile phone (or referred to as "cellular" phone), and a computer with the Internet of Things UE, such as a fixed, portable, compact, handheld, computer built-in or vehicle-mounted apparatus. For example, it may be a Station (STA), a subscriber unit, a subscriber station, a mobile station, a mobile, a remote station, an access point, a remote UE (remote terminal), an access UE (access terminal), a user apparatus (user terminal), a user agent, a user device, or user equipment (UE). Or, the UE 11 may also be a device of an unmanned aerial vehicle. Or, the UE 11 may also be a vehicle-mounted device, such as a driving computer with a wireless communication function or a wireless communication device externally connected to the driving computer. Or, the UE 11 may also be a roadside device, such as a street lamp, a signal lamp or other roadside devices with a wireless communication function, etc.

The access devices 12 may be network side devices in the wireless communication system. The wireless communication system may be a 4th generation mobile communication (4G) system also referred to as a Long Term Evolution (LTE) system; or the wireless communication system may also be a 5G system also referred to as a new radio (NR) system or a 5G NR system. Or the wireless communication system can also be a next generation system of the 5G system. An access network in the 5G system may also be referred to as a New Generation-Radio Access Network (NG-RAN), or an MTC system.

The access device 12 may be an evolved access device (eNB) adopted in the 4G system. Or, the access device 12 may also be an access device (gNB) with central and distributed architectures adopted in the 5G system. When adopting the central and distributed architecture, each of the access devices 12 usually includes a central unit (CU) and at least two distributed units (DU). The central unit is internally provided with a protocol stack including a Packet Data Convergence Protocol (PDCP) layer, a Radio Link Control (RLC) layer, and a Media Access Control (MAC) layer; and the distributed units are internally provided with a protocol stack of a Physical (PHY) layer. Specific implementations of the access devices 12 are not limited in the embodiments of the present disclosure.

A wireless connection may be established between each of the access devices 12 and the UE 11 through a wireless air interface. In different implementations, the wireless air interface is based on a 4G standard; or the wireless air interface is based on a 5G standard, for example, the wireless air interface is the NR; or the wireless air interface may also be based on the more next generation mobile communication standard.

As shown in FIG 2, an embodiment of the present disclosure provides a signal processing method executed by a user equipment (UE) including a first transceiver and a second transceiver, and the method includes following step.

At S1110, in a case that the first transceiver is deactivated, a synchronization signal is monitored through the second transceiver, in which the synchronization signal carries an area identification (ID).

The signal processing method provided in the embodiment of the present disclosure may be executed by any UE including a first transceiver and a second transceiver.

The UE may be any type of terminal device including, but not limited to a mobile phone, a tablet computer, a wearable device, an Internet of things device, a smart home device and/or a smart office device.

The UE includes the first transceiver and the second transceiver, that is, the UE is at least provided with two transceivers.

In some embodiments, the second transceiver may be a receiver only having a receiving function.

In other embodiments, the second transceiver may be a transceiver having both a sending function and a receiving function.

In an embodiment, the power consumption of the first transceiver in an on state is higher than the power consumption of the second transceiver in an on state. In some embodiments, the second transceiver may be a transceiver with a low power consumption.

In some embodiments, the second transceiver is a transceiver capable of monitoring a power saving signal, for example, the second transceiver may be a transceiver monitoring an LP WUS.

In another embodiment, the transceiving capability of the first transceiver is higher than the transceiving capability of the second transceiver. For example, the first transceiver may receive and decode a Non Access Stratum (NAS) message, a radio resource control (RRC) message, a media access control (MAC) layer message and/or downlink control information (DCI), etc. The second transceiver may only receive a physical layer signal.

Usually, the first transceiver of the UE is kept in an on state, but the first transceiver of the UE may be deactivated when certain conditions are satisfied. The certain conditions being satisfied may include, but is not limited to: the UE not performing business data transmission within a preset duration, or receiving a user instruction for deactivating the first transceiver, etc. Herein, an example that the first transceiver enters an off state (that is, the first transceiver is deactivated) is only illustrated, and the specific implementation is not only limited to the above-mentioned example.

In the embodiments of the present disclosure, if the first transceiver of the UE is deactivated and the second transceiver thereof is activated, the synchronization signal is monitored by using the second transceiver, and the synchronization signal is used for the UE to maintain synchronization with a network device.

For example, the synchronization signal may be a physical layer signal. The synchronization signal may be different from a Synchronization Signal Block (SSB) applied to a 5G New Radio (NR). The SSB usually includes a primary synchronous signal, a secondary synchronous signal and a Physical Broadcast Channel (PBCH). The PBCH in the SSB may transmit synchronization information, such as a System Frame Number (SFN), slot information and beams of the SSB, for synchronizing the UE and an access network device such as a base station. The synchronization signal received by the second transceiver does not carry the above-mentioned synchronization information such as the SFN.

In the embodiments of the present disclosure, the synchronization signal carries the area ID including, but not limited to an area number and/or an area name. The area ID indicates an area where a base station or a cell sending the synchronization signal is located.

Synchronization signals in different areas carry different area Identifications (IDs). In some embodiments, for example, in a same area, if a wake up signal configuration is changed, the area ID of the synchronization signal in the area may be changed.

The second transceiver may monitor the synchronization signal according to a clock locally in the UE that has been synchronized with a network device, if the synchronization signal fails to be monitored, it indicates to a certain extent that the UE and the network device are out of synchronization, or else, the UE and the network device still maintain synchronization. In different areas, synchronization signals sent by the network device may be the same or different, but they carry different area IDs. By means of the synchronization signal with the area ID, it is at least determined, by the UE according to the received synchronization signal, whether the UE moves out of an original area.

In this way, the technical effects are achieved as follows.

In a first aspect, when the first transceiver is deactivated, the synchronization signal is received by using the second transceiver having the low power consumption, so that it may be checked whether the current UE and the network device are out of synchronization.

In a second aspect, the synchronization signal may be further used for correcting the synchronization between the UE and the network device. For example, there may be a drift phenomenon in a local clock of the UE, and when such a drift phenomenon cannot make the second transceiver fail to receive the synchronization signal, clock drift of the UE may be corrected according to reception situation information of the second transceiver for the synchronization signal. In this way, by receiving the synchronization signal with the area ID through the second transceiver, not only it can be checked whether the network device is out of synchronization when the first transceiver of the UE is deactivated, but also the synchronization between the UE and the network device may be checked, so that the UE is maintained in a state that the first transceiver is deactivated and the second transceiver having the low power consumption is activated for a long while, to reduce the number of times that the first transceiver of the UE is woken up, and to prolong a standby duration of the UE as much as possible.

In a third aspect, the synchronization signal is configured with the area ID, if the area ID carried in the synchronization signal monitored by the UE is unchanged, it indicates that the first transceiver of the UE may be still deactivated, and it is unnecessary to wake up the first transceiver of the UE to receive a new power saving signal/synchronization signal configuration. That is to say, it is unnecessary to periodically wake up the first transceiver of the UE to monitor whether there is an updated power saving signal configuration on a network side, so that the power consumption of the UE is reduced again, and the standby duration of the UE is prolonged.

If the second transceiver further receives a power saving signal sent by the network device, the power saving signal may also have an area ID corresponding thereto, and the area ID carried in the synchronization signal and the area ID corresponding to the power saving signal may be the same or different. In an embodiment, the synchronization signal may be a broadcast signal, and therefore, the UE may receive the synchronization signal on a broadcast channel. In other embodiments, the synchronization signal may be a groupcast signal or a unicast signal, if the synchronization signal is the groupcast signal, the synchronization signal is monitored on a groupcast channel, and if the synchronization signal is the unicast signal, the synchronization signal is monitored on a unicast channel. That is to say, the second transceiver may receive the synchronization signal and/or the power saving signal sent by the network device, the synchronization signal may carry a first area ID, and the power saving signal may carry a second area ID, in which the first area ID and the second area ID may be the same or different, which is not limited in the present disclosure.

In some embodiments, in a case that the first transceiver is deactivated, monitoring a synchronization signal through the second transceiver includes:
in a case that the first transceiver is deactivated, periodically monitoring the synchronization signal through the second transceiver according to a synchronization signal configuration.

It should be understood that the synchronization signal configuration may be broadcast by the network device, and the UE receives the synchronization signal configuration through the first transceiver. The second transceiver periodically monitors the synchronization signal by using the synchronization signal configuration.

In some embodiments, the synchronization signal configuration may be configuration information of the synchronization signal monitored by the UE by means of the second transceiver. The synchronization signal configuration may be a shortened form of synchronization signal configuration information.

The synchronization signal configuration may indicate at least one of:
a cycle of the synchronization signal;
a time domain offset of the synchronization signal relative to a reference position;
a frequency domain position of the synchronization signal;
a single-time transmission duration of the synchronization signal; or
for a multi-beam scenario, a time domain offset of synchronization signals transmitted by different beams within a same cycle.

In an embodiment, the cycle of the synchronization signal may be configured by the network device, and may also be appointed by a protocol. For example, the cycle of the synchronization signal may be a value such as 160ms, 320ms, 640ms or 1280ms. These numerical values are only illustrative, and the cycle of the synchronization signal is not limited to the above-mentioned examples.

The reference position includes, but is not limited to at least one of: a starting position of a radio subframe, a sending time domain position of the synchronization signal configuration, and/or a starting position of a radio frame.

In the embodiments of the present disclosure, in a case that the first transceiver is in an off state, the second transceiver may periodically monitor the synchronization signal according to the synchronization signal configuration, and the technical effects are achieved as follows: in a first aspect, the check whether the UE and the network device maintain synchronization is achieved; in a second aspect, the synchronization between the UE and the network device is corrected based on a time when the synchronization signal is received, so that the precision of synchronization between the UE and the network device is improved; and in a third aspect, the synchronization signal is configured with the area ID, and therefore, if the UE monitors that the area ID carried in the synchronization signal is unchanged, it indicates the first transceiver of the UE may be still deactivated, and it is unnecessary to wake up the first transceiver of the UE to receive a new power saving signal/synchronization signal configuration. That is to say, it is unnecessary to periodically wake up the first transceiver of the UE to monitor whether there is an updated power saving signal configuration on a network side, so that the power consumption of the UE is reduced again, and the standby duration of the UE is prolonged.

If frequency domain positions of the synchronization signals are different, transmission frequency bands of the synchronization signals are different.

In the embodiments of the present disclosure, a maximum frequency range of the frequency domain position of the synchronization signal is smaller than or equal to a maximum bandwidth supported by the second transceiver, and thus, it can be ensured that the second transceiver may successfully and completely monitor the synchronization signal.

The single-time transmission duration of the synchronization signal may be on a symbol level. For example, one-time synchronization signal transmission may take up one or more symbols. For example, a duration occupied by the single-time synchronization signal transmission may be less than or equal to one slot.

If a cell where the UE is located performs communication by using beams, the synchronization signal configuration may further include a time domain offset of synchronization signals transmitted by different beams within a transmission cycle of the synchronization signal. The time domain offset is at least greater than a duration occupied by the single-time synchronization signal transmission. For example, the single-time synchronization signal transmission occupies Z symbols, and then, the time domain offset of the synchronization signals transmitted by the different beams within the transmission cycle of the synchronization signal is equal to or greater than Z symbols.

In an embodiment, the synchronization signal configuration may further include the area ID carried in the synchronization signal.

In another embodiment, the area ID may also be sent to the UE by the network device through other configuration information, but is not limited to be carried in the synchronization signal configuration.

In some embodiments, the method further includes:
receiving a broadcast message including the synchronization signal configuration through the first transceiver.

In some embodiments, the synchronization signal configuration is received before the first transceiver is deactivated. The synchronization signal configuration may be sent via the broadcast message or a groupcast message or a unicast message.

For example, the synchronization signal configuration may be carried in various system information blocks including, but not limited to a master information block (MIB) or a system information block (SIB) x, where x may be a value of any positive integer. The SIB carrying the synchronization signal configuration may be an SIB that has been provided in the related art, for example, the synchronization signal configuration is carried by utilizing remaining bits of the SIB that has be provided in the related art, or a new SIB special for the synchronization signal configuration may be provided for the synchronization signal configuration.

The above description is only an example that the UE receives the synchronization signal by using the first transceiver, but the specific implementation is not limited to the above-mentioned example.

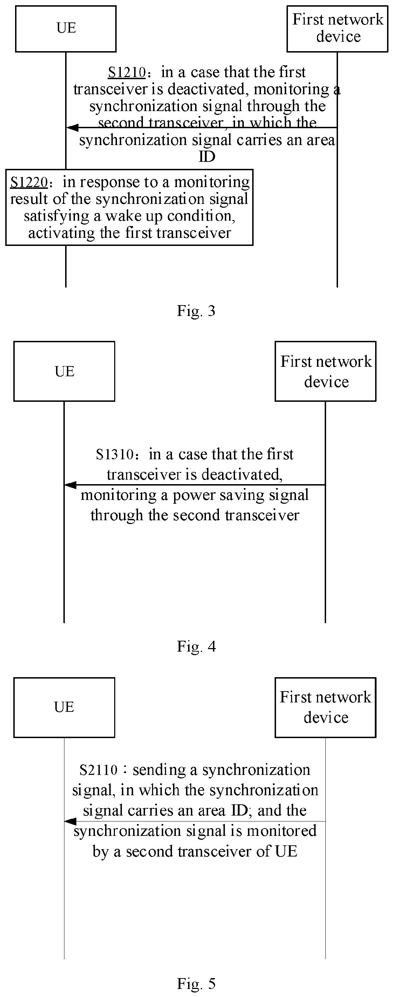

As shown in FIG 3, an embodiment of the present disclosure provides a signal processing method executed by a UE including a first transceiver and a second transceiver, and the method includes following steps.

At S1210, in a case that the first transceiver is deactivated, a synchronization signal is monitored through the second transceiver, in which the synchronization signal carries an area identification (ID).

At S1220, in response to a monitoring result of the synchronization signal satisfying a wake up condition, the first transceiver is activated.

In the embodiments of the present disclosure, the second transceiver monitors the synchronization signal and obtains the monitoring result. The monitoring result may indicate at least one of the following information:
a determination whether the synchronization signal is successfully monitored;
a time when the synchronization signal is actually monitored; or
a time difference between a time when the synchronization signal is actually monitored and an expected monitoring time indicated by the synchronization signal configuration.

If it is determined, according to the monitoring result of the synchronization signal, that the precision of out-of-synchronization or synchronization between the UE and the network device is low, it is considered that the wake up condition is satisfied. When the wake up condition is satisfied, the UE may wake up the first transceiver.

In an embodiment, after the first transceiver is woken up, the second transceiver may be deactivated. By deactivating the second transceiver, the power consumption caused by the second transceiver in an on state may be reduced. In other embodiments, the power consumption of the second transceiver itself may be very low, in order to reduce switching between the on state and the off state of the second transceiver, a wake up state of the second transceiver may be maintained even if the first transceiver is woken up.

In an embodiment, the monitoring result of the synchronization signal satisfying the wake up condition includes at least one of:
a change of the area ID carried in the synchronization signal being monitored;
the synchronization signal being not monitored at a time of monitoring the synchronization signal; or
a number of synchronization signals that are not monitored continuously reaching a number threshold.

If the change of the area ID carried in the synchronization signal is monitored, that is, the UE does not monitor the area ID of an original area, it indicates that the UE has entered a new area in which a wake up signal configuration different from that in the original area. For example, the UE moves from one cell to another cell, the UE moves between the cells to cause the change of the area, and thus, the ID carried in the synchronization signal monitored by the UE will be different or the synchronization signal cannot be monitored. Or, if the area ID carried in the monitored synchronization signal is changed, it indicates that the configuration of the area ID involved at a network side is changed, and thus, the UE needs to wake up the first transceiver to receive the updated configuration of the involved area ID, for example, the configuration of the involved area ID includes a synchronization signal configuration and a power saving signal configuration.

In an embodiment, if the UE does not monitor the synchronization signal at the time of monitoring the synchronization signal, it is considered that the UE and the network device are out of synchronization.

In another embodiment, the power consumption of the second transceiver of the UE is relatively low, due to poor radio channel or building shielding or other situations, it is also possible that the second transceiver cannot monitor the synchronization signal even if the UE and the network device are not out of synchronization. For this purpose, in order to reduce interference of the situations other than such out-of-synchronization to synchronization signal monitoring performed by the second transceiver, if the number of the synchronization signals that are not monitored by the second transceiver reaches the number threshold, it is considered that the UE and the network device are out of synchronization. The number threshold may be any positive integer greater than 1. For example, the number threshold may be 2, 3 or 4 and other values.

Of course, discovering the out-of-synchronization between the UE and the network device by monitoring the synchronization signal is one situation in which the wake up condition is satisfied. The specific implementation is not limited to such out-of-synchronization between the UE and the network device.

For example, if the second transceiver monitors the power saving signal indicating to wake up, it may also be considered that the wake up condition is satisfied.

In an embodiment, the power saving signal may also carry an area ID, and the area IDs corresponding to the synchronization signal and the power saving signal that are sent by network device in the same area are the same. In this way, it is convenient for the UE located on a boundary of two areas to distinguish the currently monitored synchronization signal and/or a synchronization signal source area.

In another embodiment, the method further includes: after the first transceiver is activated, monitoring SSB through the first transceiver.

If the first transceiver is woken up, in order to implement precise synchronization, the first transceiver will monitor the SSB.

For example, the first transceiver is woken up due to the out-of-synchronization between the UE and the network device, the first transceiver monitors the SSB firstly after being woken up, and the synchronization between the UE and the network device is re-implemented by monitoring the SSB.

For example, the first transceiver is woken up due to a data sending demand of the UE itself or the network device instead of the out-of-synchronization between the UE and the network device. If the time when the first transceiver is woken up is not the time of monitoring the SSB, the first transceiver preferably performs data transmission according to a synchronization clock between the second transceiver of the UE and the network device. For example, when to-be-sent data cached in the UE reaches a sending threshold, data transmission may be preferably performed to reduce data transmission delay.

In an embodiment, one or more cells exist in an area indicated by the area ID.

One or more cells exist in the area, and if the area includes a plurality of cells, the plurality of cells may be discretely or continuously distributed in geographic space. For example, if one area includes a plurality of cells, the plurality of cells may belong to a same tracking area (TA). Of course, an example that the area includes one or more cells is only described herein, and the specific implementation is not limited to the description of the example.

If the area only includes one cell, the area ID may be a cell ID. The cell ID includes, but is not limited to a Physical Cell Identity (PCI).

If the plurality of cells exist in the area, the area ID may be a group ID of a cell group consisting of the plurality of cells. Of course, the area ID is not limited to the group ID.

In some embodiments, power saving signal configurations of the plurality of cells in the area indicated by the same area ID are the same; and/or, synchronization signal configurations of the plurality of cells in the area indicated by the same area ID are the same. For example, power saving signal configurations of a plurality of cells in an area indicated by a first area ID are the same, power saving signal configurations of a plurality of cells in an area indicated by a second area ID are the same, and the power saving signal configurations of the plurality of cells in the area indicated by the first area ID may be the same as or different from the power saving signal configurations of the plurality of cells in the area indicated by the second area ID.

The power saving signal configuration may also be referred to as power saving signal configuration information.

The power saving signal configuration may indicate at least one of:
a cycle of the power saving signal;
a frequency domain position of the power saving signal; or
a time domain offset of the power saving signal relative to a reference position.

The cycle of the power saving signal determines a transmission frequency of the power saving signal. Usually, after the first transceiver enters an off state, the second transceiver may monitor the power saving signal. In this way, it is determined, by monitoring the power saving signal, whether the network device needs to wake up the second transceiver of the UE.

In order to reduce the reception of the power saving signal configuration and/or the synchronization signal configuration of the UE, if a plurality of cells exist in one cell, the power saving signal configurations and the synchronization signal configurations of the plurality of cells may be the same. In this way, when moving from one cell to another cell in the same area, the UE may monitor the power saving signal and/or the synchronization signal based on the same power saving signal configuration and/or the same synchronization signal configuration.

In some embodiments, the power saving signal configuration may further include an area ID corresponding to the power saving signal, and the area ID may be the same as the area ID included by the power saving signal configuration or may be the same as an area ID corresponding to a wake up signal sent by a base station.

As shown in Fig. 4, an embodiment of the present disclosure provides a signal processing method executed by a UE including a first transceiver and a second transceiver, and the method includes following steps.

At S1310, in a case that the first transceiver is deactivated, a power saving signal is monitored through the second transceiver.

In the embodiments of the present disclosure, if the first transceiver is deactivated, the power saving signal is monitored by using the second transceiver. The power saving signal includes, but is not limited to the aforementioned LP WUS.

The power saving signal may be any signal capable of reducing power consumption of the UE.

Therefore, in some embodiments, when the second transceiver of the UE monitors the power saving signal, if the power saving signal indicates to wake up the UE, the second transceiver will wake up the first transceiver.

For example, there is a General Purpose Input/Output (GPIO) pin between the first transceiver and the second transceiver. If the second transceiver needs to wake up the first transceiver, a GPIO signal for waking up the first transceiver may be sent to the first transceiver through the GPIO pin.

For another example, the first transceiver and the second transceiver are connected by a pin, such as an interrupt pin. If it is determined by the second transceiver that the first transceiver needs to be woken up, an interrupt signal may be sent to the first transceiver through the interrupt pin to wake up the first transceiver.

In some embodiments, it is determined by the second transceiver according to a monitoring result of the synchronization signal and or a monitoring result of the power saving signal that the first transceiver needs to be woken up, and it is also possible that a demand of waking up the first transceiver is informed to a processor (such as a central processing unit or a microprocessor) of the UE, etc., and the first transceiver is woken up by the processor.

In a word, in the embodiments of the present disclosure, the second transceiver may be further used for monitoring the power saving signal.

In some embodiments, a frequency domain position of the power saving signal is the same as a frequency domain position of the synchronization signal;
and/or,
a frequency domain position of the power saving signal is different from a time domain position of the synchronization signal.

If the frequency domain positions of the power saving signal and the synchronization signal are the same, when the second transceiver not only needs to receive the power saving signal, but also needs to receive the synchronization signal, the synchronization signal and the power saving signal are integrally monitored without switching a monitoring frequency.

The time domain positions of the power saving signal and the synchronization signal are different, which reduces the monitoring problem caused by overlapping.

In some embodiments, the method further includes:
in response to the time domain positions of the power saving signal and the synchronization signal overlapping, it is determined that the synchronization signal is monitored through the second transceiver.

In other embodiments, the method further includes:
in response to the time domain positions of the power saving signal and the synchronization signal overlapping, it is determined that the power saving signal is monitored through the second transceiver.

Usually, the UE or the network device does not expect that the time domain positions of the power saving signal and the synchronization signal overlap, and therefore, the synchronization signal configuration that has been generated may be referred when the power saving signal configuration is generated, or the power saving signal configuration that has been generated may also be referred when the synchronization signal configuration is generated. However, there may also be a situation that the configuration is abnormal, and if the configuration is abnormal, a time of monitoring the synchronization signal indicated by the synchronization signal configuration and a time of monitoring the power saving signal indicated by the power saving signal configuration may overlap in time domain.

If the time domain positions of the power saving signal and the synchronization signal overlap, the UE may select to monitor the synchronization signal or the power saving signal according to a network indication or agreement of a protocol.

For example, if time domain positions of a wake up signal and/or the power saving signal are the same (i.e., overlap), the power saving signal or the wake up signal may be selectively monitored according to a network indication issued by a base station or agreement of the protocol.

In another embodiment, when it is determined, according to the synchronization signal configuration and the power saving signal configuration, that the time domain positions of the synchronization signal and the power saving signal overlap and no network indication is received or no agreement of the protocol is appointed, the UE firstly receives, at an overlapping time, a signal sent by the base station, then decodes the received signal through a sequence of synchronization signals and/or a sequence of power saving signals, and determines, according to a decoding result, whether the second transceiver of the current UE receives the synchronization signal or the wake up signal.

In other embodiments, the method further includes:
receiving a broadcast message of a power saving signal configuration through the first transceiver.

In the embodiments of the present disclosure, the first transceiver may receive the power saving signal configuration carried in the broadcast message in advance before the first transceiver is deactivated, that is, the power saving signal configuration is received through the first transceiver before the first transceiver is deactivated.

The broadcast message includes, but is not limited to an MIB or an SIB.

After the first transceiver is deactivated, the second transceiver will monitor the power saving signal according to the power saving signal configuration.

In an embodiment, in a multi-beam scenario, different beams in the same cycle send the synchronization signals in different time periods.

If beam communication is adopted between the base station and the UE, in the multi-beam scenario, the UE may be distributed in coverage ranges of different beams. In this case, within one transmission cycle of the synchronization signal, the different beams will send the synchronization signals at different time periods.

For example, the synchronization signal configuration may include:
a cycle of the synchronization signal;
a duration in which the synchronization signal is monitored, i.e., a single-time transmission duration of the synchronization signal; or
a beam offset, i.e., a time domain offset of adjacent two-time synchronization signal transmissions on different beams.

In this way, the time periods when the UE may monitor the synchronization signals by performing beam scanning or on different serving beams are different.

In an embodiment, an embodiment of the present disclosure provides a signal processing method that may be executed by a UE, and includes:
in a case that a first transceiver is in an on state, receiving a synchronization signal configuration through the first transceiver in the on state;
if a certain condition is satisfied, deactivating the first transceiver;
monitoring a synchronization signal through a second transceiver in an on state according to the synchronization signal configuration;
determining, according to a monitoring result of the synchronization signal, whether a wake up condition is satisfied;
for example, if the wake up condition is satisfied, activating the first transceiver;
if out-of-synchronization between the UE and a first network device satisfies the wake up condition, the first transceiver monitoring an SSB; and
synchronizing with the first network device according to the monitored SSB.

In another embodiment, an embodiment of the present disclosure provides a signal processing method that may be executed by a UE, and includes:
in a case that a first transceiver is in an on state, receiving a synchronization signal configuration and a power saving signal configuration through the first transceiver in the on state;
if a certain condition is satisfied, deactivating the first transceiver;
monitoring a synchronization signal through a second transceiver in an on state according to the synchronization signal configuration, and monitoring a power saving signal through a second transceiver in an on state according to the power saving signal configuration;
determining, according to a monitoring result of the synchronization signal, whether a wake up condition is satisfied; if the wake up condition is satisfied, activating the first transceiver; or, if the power saving signal indicating the first transceiver to be woken up is monitored according to the power saving signal configuration, activating the first transceiver;
if out-of-synchronization between the UE and a first network device satisfies the wake up condition, the first transceiver monitors an SSB; and synchronization with the first network device is performed according to the monitored SSB; and
if the power saving signal indicating the first transceiver to be woken up is monitored, business data transmission and/or signaling transmission between the first transceiver and the first network device may be performed after the first transceiver is woken up.

It should be understood that the embodiment shown in FIG 4 may be implemented alone or combined with other embodiments of the present disclosure, which is not limited in the present disclosure.

As shown in FIG 5, an embodiment of the present disclosure provides a signal processing method executed by a first network device, and the method includes following steps.

At S2110, a synchronization signal is sent, in which the synchronization signal carries an area ID; and the synchronization signal is monitored by a second transceiver of a UE.

The first network device includes, but is not limited to a base station, and the base station includes, but is not limited to an eNB or a gNB.

The synchronization signal may be monitored by the second transceiver of the UE. After monitoring the synchronization signal, the second transceiver of the UE maintains synchronization with a network device according to a monitoring result of the synchronization signal.

The synchronization signal is different from an SSB, and may also be different from a primary synchronization signal or a secondary synchronization signal included by the SSB.

In the embodiments of the present disclosure, the synchronization signal includes the area ID. The area ID includes, but is not limited to an area number and/or an area name, etc. The area ID may be an area ID configured for a power saving signal.

In some embodiments, S2110 may include: sending the synchronization signal carrying the area ID according to an area ID indicated by a power saving signal configuration.

In other embodiments, S2110 may include: when the power saving signal configuration is updated, sending the synchronization signal carrying the area ID according to an area ID indicated by the updated power saving signal configuration.

In this way, in the case that the wake up signal instructing the UE to wake up the first transceiver is not sent, the first network device may impliedly instruct the UE to wake up a first transceiver through the area ID carried in the synchronization signal, and receives the updated power saving signal configuration in time.

In some embodiments, the method further includes:
sending a synchronization signal configuration via a broadcast message.

The synchronization signal configuration is at least on a cell level, that is, any UE that needs to use the synchronization signal configuration to monitor the synchronization signal among all the UEs in a cell needs to receive the synchronization signal configuration, and therefore, compared with unicast or multicast, sending the synchronization signal configuration by adopting the broadcast message can ensure that all the UEs in the cell can monitor the synchronization signal configuration.

The broadcast message includes, but is not limited to an MIB and/or an SIB.

The synchronization signal configuration includes, but is not limited to at least one of:
the synchronization signal configuration may indicate at least one as follows:
a cycle of the synchronization signal;
a frequency domain position of the synchronization signal;
a time domain offset of the synchronization signal relative to a reference time;
for a multi-beam scenario, a time domain offset of synchronization signals transmitted by different beams within a same cycle; or
a single-time transmission duration of the synchronization signal.

For example, the synchronization signal configuration may further include the area ID carried in the synchronization signal, and the area ID may be the same as an area ID indicated by the power saving signal configuration.

If the synchronization signal configuration carries the area ID, the synchronization signal configuration may be used for the UE to determine whether the synchronization signal currently received by the second transceiver is a synchronization signal that it expects to monitor.

In an embodiment, the cycle of the synchronization signal may be configured by a network device, and may also be appointed by a protocol. For example, the cycle of the synchronization signal may be a value such as 160ms, 320ms, 640ms or 1280ms. During the specific implementations, the cycle of the synchronization signal is not limited to the above-mentioned examples.

The reference position includes, but is not limited to at least one of: a starting position of a radio subframe, a sending time domain position of the synchronization signal configuration, and/or a starting position of a radio frame.

In the embodiments of the present disclosure, in a case that the first transceiver is in an off state, the second transceiver may periodically monitor the synchronization signal according to the synchronization signal configuration. On one hand, the check whether the UE and the network device maintain synchronization is achieved; and on the other hand, the synchronization between the UE and the network device is corrected based on a time when the synchronization signal is received, so that the precision of synchronization between the UE and the network device is improved

In the embodiments of the present disclosure, a maximum frequency range of the frequency domain position of the synchronization signal is smaller than or equal to a maximum bandwidth supported by the second transceiver, and thus, it can be ensured that the second transceiver may successfully and completely monitor the synchronization signal.

The single-time transmission duration of the synchronization signal may be on a symbol level. For example, one-time synchronization signal transmission may take up one or more symbols. For example, a duration occupied by the single-time synchronization signal transmission may be less than or equal to one slot.

If a cell where the UE is located performs communication by using beams, the synchronization signal configuration may further include a time domain offset of synchronization signals transmitted by different beams within a transmission cycle of the synchronization signal. The time domain offset is at least greater than a duration occupied by the single-time synchronization signal transmission. For example, the single-time synchronization signal transmission occupies Z symbols, and then, the time domain offset of the synchronization signals transmitted by the different beams within the transmission cycle of the synchronization signal is equal to or greater than Z symbols. Z is a positive integer.

In an embodiment, the synchronization signal configuration may further include the area ID carried in the synchronization signal.

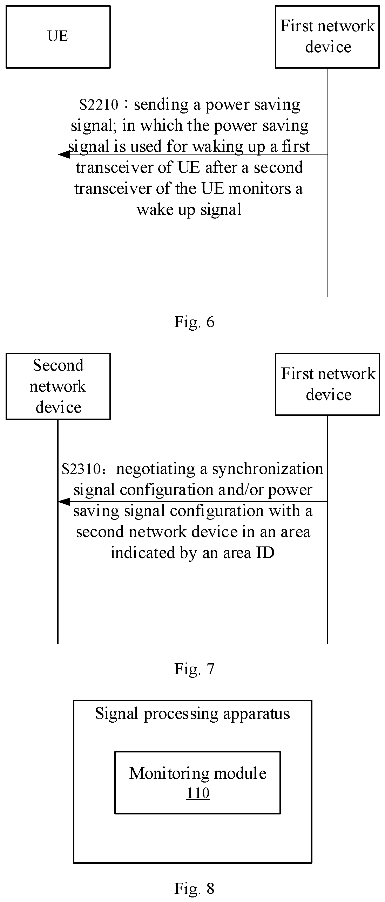

Of course, in another embodiment, the area ID may also be received from a base station side through other configuration information, but is not limited to be carried in the synchronization signal configuration. For example, the base station in the area not only configures the synchronization signal, but also configures the power saving signal. If the power saving signal configuration is sent firstly, and the power saving signal configuration has included the area ID, in view of a fact that the area ID carried in the synchronization signal and the area ID corresponding to the power saving signal are the same area ID, it is possible that the synchronization signal configuration does not include the area ID. As shown in FIG 6, an embodiment of the present disclosure provides a signal processing method executed by a first network device, and the method includes following steps.

At S2210, a power saving signal is sent; in which the power saving signal is used for waking up a first transceiver of a UE after the second transceiver of the UE monitors the power saving signal.

The power saving signal at least includes an LP WUS.

The power saving signal is used for waking up the first transceiver of the UE or instructing the first transceiver of the UE to further sleep.

It is worth noting that the signal processing method may be executed alone or combined with any aforementioned embodiment applied to the first network device.

In an embodiment, the first network device may further send a power saving signal configuration before sending the power saving signal, and the power saving signal configuration may be received by the first transceiver of the UE.

The power saving signal configuration may be sent by broadcast, multicast or unicast. However, the power saving signal involved in the power saving signal configuration may be a physical layer signal on a cell level. Therefore, in some embodiments, the method further includes:
sending a power saving signal configuration via a broadcast message.

The power saving signal configuration is broadcast and sent via the broadcast message, and thus, all LTEs in a cell may monitor the power saving signal configuration.

In some embodiments, a frequency domain position of the power saving signal is the same as a frequency domain position of the synchronization signal;
and/or,
a frequency domain position of the power saving signal is different from a time domain position of the synchronization signal.

In the embodiments of the present disclosure, the synchronization signal and the power saving signal may be both received by the second transceiver of the UE, but a bandwidth supported by the second transceiver may be limited. If the frequency domain positions of the power saving signal and the synchronization signal are the same, the second transceiver of the UE may simply and conveniently complete the reception of the synchronization signal and/or the wake up signal without switching a reception frequency point.

In some embodiments, one or more cells exist in an area indicated by the area ID.

The area may at least include on cell. If the area includes a plurality of cells, the plurality of cells may carry the power saving signal configurations and/or the synchronization signal configurations. In this way, switching of the UE among the different cells in the area is reduced, it is unnecessary to receive the synchronization signal configuration and/or the power saving signal configuration again from a network as long as no power saving signal configuration and/or synchronization signal configuration is updated on a network side.

In some embodiments,
power saving signal configurations of a plurality of cells in the area indicated by a same area ID are the same;
   and/or,
synchronization signal configurations of a plurality of cells in the area indicated by a same area ID are the same.

In some embodiments, the power saving signal configurations of the plurality of cells in the area may be partially the same. For example, the area IDs included in the power saving signal configurations are the same.

In the embodiments of the present disclosure, if the power saving signal configurations of the plurality of cells are the same, it indicates that the transmission cycles and/or usage frequency bands of the power saving signals are also configured to be the same for the plurality of cells. In this way, when the UE moves from one cell to another cell in the area, the power saving signal may be monitored on the basis of the same power saving signal configuration.

The synchronization signal configurations of the plurality of cells in the area are the same, then, when the UE moves from one cell to another cell in the area, the synchronization signal may be monitored on the basis of the same power saving signal configuration.

It is worth noting that the synchronization signal configuration is different from an SSB configuration, and an SSB corresponding to the SSB configuration is monitored by the first transceiver of the UE and used to perform synchronization with the first network device. In some embodiments, the method further includes:

in response to the time domain positions of the power saving signal and the synchronization signal overlapping, determining to send the synchronization signal;
or,
in response to the time domain positions of the power saving signal and the synchronization signal overlapping, determining to send the power saving signal.

The synchronization signal and the power saving signal are different, and functions achieved at a UE side are different. In the embodiments of the present disclosure, when the time domain positions of the synchronization signal and the power saving signal overlap, reception conflict of the UE may be caused.

In the embodiments of the present disclosure, the first network device may send the synchronization signal or power saving signal according to an indication issued by itself or select to send the power saving signal or the synchronization signal according to agreement of a protocol.

In another embodiment, the first network device may flexibly select to send the synchronization signal or the power saving signal according to a current demand, subsequently, the UE receives, at an overlapping time, a signal sent by the first network device and determines, according to a decoding result, whether the first network device sends the synchronization signal or the power saving signal. For example, the first network device considers that if it is relatively urgent to wake up the device currently, the wake up signal is preferably sent; and if the first network device does not need to wake up the UE, the synchronization signal is preferably sent.

As shown in FIG 7, an embodiment of the present disclosure provides a signal processing method executed by a first network device, and the method further includes following steps.

At S2310, a synchronization signal configuration and/or power saving signal configuration is negotiated with a second network device in an area indicated by an area ID.

It is worth noting that the signal processing method provided in the embodiment may be executed alone or combined with any aforementioned signal processing method performed by the first network device.

The second network device may be a base station in the area indicated by a same area ID shared with the first network device.

The self-generated synchronization signal configuration and/or power saving signal configuration are exchanged between the first network device and the second network device through an air interface or a backhaul link or a core network.

By the negotiation between the first network device and the second network device, it may be ensured that the synchronization signal configurations are configured to be the same and the power saving signal configurations are configured to be the same in the same area.

In some embodiments, S2310 includes at least one of:
before the first network device broadcasts the synchronization signal configuration, receiving the synchronization signal configuration that has been broadcast by the second network device, and determining the synchronization signal configuration provided by the second network device as the synchronization signal configuration of the first network device;
before the first network device broadcasts the power saving signal configuration, receiving the power saving signal configuration that has been broadcast by the second network device, and determining the power saving signal configuration provided by the second network device determined as the power saving signal configuration of the first network device;
in response to not receiving the synchronization signal configuration that has been broadcast by the second network device, providing the synchronization signal configuration of the first network device to the second network device; and
in response to not receiving the power saving signal configuration that has been broadcast by the second network device, providing the power saving signal configuration of the first network device to the second network device.

In some embodiments, S2310 may include:
before the first network device performs configuration of the synchronization signal, sending a request message to the second network device, in which the request message requests the second network device that has generated the synchronization signal configuration to share the synchronization signal configuration;
receiving, within a preset duration, the synchronization signal configuration returned by the second network device on the basis of the request message; and
if the synchronization signal configuration sent by the second network device is not received within the preset duration, determining that no second network device generates the synchronization signal configuration.

A starting time of the preset duration is a time when the first network device sends the request message.

In some embodiments, S2310 may include:
before the first network device performs configuration of the synchronization signal, sending a request message to the second network device, in which the request message requests the second network device that has generated the synchronization signal configuration to share the power saving signal configuration;
receiving, within a preset duration, the power saving signal configuration returned by the second network device on the basis of the request message; and
if the power saving signal configuration sent by the second network device is not received within the preset duration, determining that no second network device generates the power saving signal configuration.

In an embodiment, in response to not receiving the synchronization signal configuration that has been broadcast by the second network device, providing the synchronization signal configuration of the first network device to the second network device includes:
in response to not receiving the synchronization signal configuration that has been broadcast by the second network device, the first network device actively sending the generated synchronization signal configuration to the second network device after generating the synchronization signal configuration;
   or,
in response to not receiving the synchronization signal configuration that has been broadcast by the second network device but receiving a request message of at least one second network device, the first network device actively sending the generated synchronization signal configuration to the second network device after generating the synchronization signal configuration;
   or,
in response to not receiving the power saving signal configuration that has been broadcast by the second network device, the first network device actively sending the generated power saving signal configuration to the second network device after generating the power saving signal configuration;
   or,
in response to not receiving the power saving signal configuration that has been broadcast by the second network device but receiving a request message of at least one second network device, the first network device actively sending the generated power saving signal configuration to the second network device after generating the power saving signal configuration.

In a word, negotiation for the power saving signal configuration and the synchronization signal configuration may be performed between the first network device and the second network device, and thus, it is ensured that a plurality of network devices in the same area send the power saving signals and the synchronization signals according to the same power saving signal configuration and the same synchronization signal configuration.

The UE uses a low power receiver to receive the synchronization signal (the synchronization signal may be generated according to a synchronization sequence). The synchronization signal carries the area ID. The area ID may indicate an area where the base station sending the synchronization signal is located. The low power receiver described herein may be the aforementioned second receiver.

Cells configured with the same area ID have the same power saving signal configuration, and the power saving signal configuration includes, but is not limited to a WUS configuration.

Cells configured with the same first area ID have the same synchronization signal configuration. The synchronization signal configuration includes a cycle of a synchronization sequence, a time domain offset and/or a frequency domain position, etc.

One area includes one or more cells.

The synchronization signal is periodically sent.

The base station sends the synchronization signal configuration via the broadcast message.

In a multi-beam scenario, relative time domain positions of the synchronization signals sent by different beams within the same cycle are defined by a protocol or configured by the base station.

In an embodiment, it is possible that the frequency domain position of the synchronization signal is not explicitly configured in the synchronization signal configuration, and the frequency domain position of the synchronization signal is the same as the frequency domain position of the power saving signal by default.

The UE does not expect that the time domains of the power saving signal and the synchronization signal overlap.

If a monitoring occasion of a certain power saving signal corresponding to the UE just overlaps with a sending occasion of the synchronization signal, the UE selects to monitor the synchronization signal or the power saving signal.

As shown in FIG 8, an embodiment of the present disclosure provides a signal processing apparatus, in which the apparatus includes:
a monitoring module 110 configured to, in a case that a first transceiver is deactivated, monitor a synchronization signal through a second transceiver, in which the synchronization signal carries an area identification (ID).

The signal processing apparatus provided in the embodiment of the present disclosure may be included in a UE. The UE may include a first transceiver and a second transceiver.

In some embodiments, the signal processing apparatus may further include a storage module which may be at least used for storing the area ID.

In some embodiments, the monitoring module 110 may be a program module; and after the program module is executed by a processor, the aforementioned operations may be implemented.

In other embodiments, the monitoring module 110 may be a software and hardware combined module; the software and hardware combined module includes, but is not limited to various programmable arrays; and the programmable arrays include, but are not limited to field programmable arrays and/or complex programmable arrays.

In further embodiments, the monitoring module 110 may further include pure hardware modules; and the pure hardware modules include, but are not limited to application-specific integrated circuits.

In some embodiments, the monitoring module 110 is configured to, in a case that the first transceiver is deactivated, periodically monitor the synchronization signal through the second transceiver according to a synchronization signal configuration.

In some embodiments, the apparatus further includes:
a first receiving module configured to receive, through the first transceiver, a broadcast message comprising the synchronization signal configuration.

In some embodiments, the apparatus further includes:
an activating module configured to, in response to a monitoring result of the synchronization signal satisfying a wake up condition, activate the first transceiver.

In some embodiments, the monitoring result of the synchronization signal satisfying the wake up condition includes at least one of:
a change of the area ID carried in the synchronization signal being monitored;
the synchronization signal being not monitored at a time of monitoring the synchronization signal; or
a number of synchronization signals that are not monitored continuously reaching a number threshold.

In some embodiments, the apparatus further includes:
a second monitoring module 110 configured to, after the first transceiver is activated, monitor an SSB through the first transceiver.

In some embodiments, one or more cells exist in an area indicated by the area ID.

In some embodiments, power saving signal configurations of a plurality of cells in an area indicated by a same area ID are the same;
and/or,
synchronization signal configurations of a plurality of cells in an area indicated by a same area ID are the same.

In some embodiments, the first monitoring module 110 is further configured to, in a case that the first transceiver is deactivated, monitor a power saving signal through the second transceiver.

In some embodiments, a frequency domain position of the power saving signal is the same as a frequency domain position of the synchronization signal;
and/or,
a frequency domain position of the power saving signal is different from a time domain position of the synchronization signal.

In some embodiments, the apparatus further includes:
a first determining module configured to, in response to time domain positions of the power saving signal and the synchronization signal overlapping, determine that the synchronization signal is monitored through the second transceiver.

In some embodiments, the apparatus further includes:
a second determining module configured to, in response to time domain positions of the power saving signal and the synchronization signal overlapping, determine that the power saving signal is monitored through the second transceiver.

In some embodiments, the apparatus further includes:
a second receiving module configured to receive a broadcast message of a power saving signal configuration through the first transceiver.

In some embodiments, in a multi-beam scenario, different beams in a same cycle send the synchronization signal in different time periods.

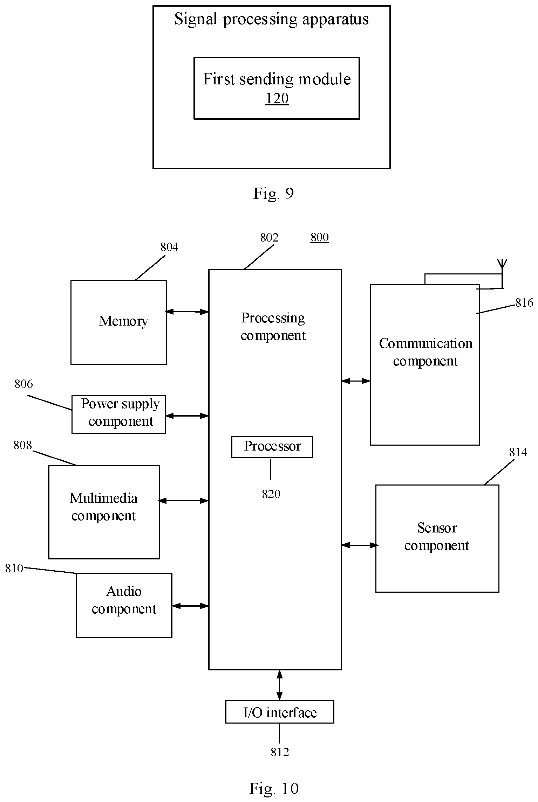

As shown in FIG 9, an embodiment of the present disclosure provides a signal processing apparatus, in which the apparatus includes:
a first sending module 120 configured to send a synchronization signal, in which the synchronization signal carries an area ID; and the synchronization signal is monitored by a second transceiver of a UE.

The signal processing apparatus is included in a first network device. The first network device may be a base station. The base station includes, but is not limited to an eNB and/or a gNB.

In some embodiments, the signal processing apparatus further includes a storage module which may be at least used for storing the area ID.

In some embodiments, the first sending module 120 may be a program module; and after the program module is executed by a processor, the aforementioned operations may be implemented.

In other embodiments, the first sending module 120 may be a software and hardware combined module; the software and hardware combined module includes, but is not limited to programmable arrays; and the programmable arrays include, but are not limited to field programmable arrays and/or complex programmable arrays.

In further embodiments, the first sending module 120 may further include pure hardware modules; and the pure hardware modules include, but are not limited to application-specific integrated circuits.

In some embodiments, the apparatus further includes:
a first broadcasting module configured to send a synchronization signal configuration via a broadcast message.

In some embodiments, the synchronization signal configuration includes at least one of:
a cycle of the synchronization signal;
a frequency domain position of the synchronization signal;
a time domain offset of the synchronization signal relative to a reference time; and
for a multi-beam scenario, a time domain offset of synchronization signals transmitted by different beams within a same cycle.

In some embodiments, the apparatus further includes:
a second sending module configured to send a power saving signal; in which the power saving signal is used for waking up a first transceiver of the UE after the second transceiver of the UE monitors the power saving signal.

In some embodiments, the apparatus further includes:
a second broadcasting module configured to send a power saving signal configuration via a broadcast message.

In some embodiments, a frequency domain position of the power saving signal is the same as a frequency domain position of the synchronization signal;
and/or,
a frequency domain position of the power saving signal is different from a time domain position of the synchronization signal.

In some embodiments, one or more cells exist in an area indicated by the area ID.

In some embodiments, power saving signal configurations of a plurality of cells in an area indicated by a same area ID are the same;
and/or,
synchronization signal configurations of a plurality of cells in an area indicated by a same area ID are the same.

In some embodiments, the apparatus further includes:
a third determining module configured to, in response to time domain positions of the power saving signal and the synchronization signal overlapping, determine to send the synchronization signal.

In some embodiments, the value further includes:
a fourth determining module configured to, in response to time domain positions of the power saving signal and the synchronization signal overlapping, determine to send the power saving signal.

In some embodiments, the apparatus further includes:
a negotiating module configured to negotiate a synchronization signal configuration and/or a power saving signal configurations with the second network device in an area indicated by the area ID.

In some embodiments, the negotiating module is configured to execute at least one of:
before the first network device broadcasts the synchronization signal configuration, receiving the synchronization signal configuration that has been broadcast by the second network device, and determining the synchronization signal configuration provided by the second network device as the synchronization signal configuration of the first network device;
before the first network device broadcasts the power saving signal configuration, receiving the power saving signal configuration that has been broadcast by the second network device, and determining the power saving signal configuration provided by the second network device as the power saving signal configuration of the first network device;
in response to not receiving the synchronization signal configuration that ha s been broadcast by the second network device, providing the synchronization signal configuration of the first network device to the second network device; or
in response to not receiving the power saving signal configuration that has been broadcast by the second network device, providing the power saving signal configuration of the first network device to the second network device.

An embodiment of the present disclosure provides a communication device including:
a memory used for storing executable instructions for a processor; and
the processor respectively connected to the memory;
in which the processor is configured to execute the signal processing method provided by any aforementioned technical solution.

The processor may include various types of storage media which are non-temporary computer storage media capable of further memorizing information stored thereon after the communication device is powered down.

Herein, the communication device includes a UE or a network element, and the network element may be any one of the aforementioned first to fourth network elements.

The processor may be connected to the memory by a bus, etc., and is used for reading executable programs stored on the memory, such as at least one of the methods shown in FIG 2 to FIG 7.

FIG. 10 is a block diagram of a UE 800 shown according to an exemplary embodiment. For example, the UE 800 may be a mobile phone, a computer, a digital broadcast user device, an information transceiver device, a game console, a tablet device, a medical device, a fitness equipment, a personal digital assistant, etc.

Refer to FIG 10, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as an operation related to display, telephone calling, data communication, camera operation and recording operation. The processing component 802 may include one or more processors 820 to execute instructions so as to generate all or parts of steps of the above-mentioned method. In addition, the processing component 802 may include one or more modules which facilitate interaction between the processing component 802 and other components. For example, the processing component 802 may include a multimedia module to facilitate interaction between the multimedia component 808 and the processing component 802.

The memory 804 is configured to store various types of data so as to support operations on the UE 800. Examples of the data include instructions for any application or method operated on the UE 800, contact data, telephone book data, information, pictures, videos, etc. The memory 804 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power for the various components of the UE 800. The power supply component 806 may include a power management system, one or more power supplies, and other components related to the generation, management and power distribution of the UE 800.

The multimedia component 808 includes a screen providing an output interface between the UE 800 and a user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touching, sliding and gestures on the touch panel. The touch sensors can not only sense a boundary of a touching or sliding action, but also detect a duration and a pressure which are related to the touching or sliding operation. In some embodiments, the multimedia component 808 includes a front camera and/or a rear camera. When the UE 800 is in an operation mode, such as a shooting mode or a video mode, the front camera and/or the rear camera can receive external multimedia data. Each of the front camera and the rear camera may be a fixed optical lens system or have a focal length and optical zooming ability.

The audio component 810 is configured to output and/input an audio signal. For example, the audio component 810 includes a microphone (MIC). When the UE 800 is in an operation mode, such as a calling mode, a recording mode and a voice recognition mode, the MIC is configured to receive an external audio signal. The received audio signal may be further stored in the memory 804 or sent by the communication component 816. In some embodiments, the audio component 810 further includes a loudspeaker for outputting the audio signal.

The I/O interface 812 is an interface provided between the processing component 802 and a peripheral interface module, and the above-mentioned peripheral interface module may be a keyboard, a click wheel, buttons, etc. These buttons may include, but are not limited to a home button, a volume button, a start button, and a lock button.

The sensor component 814 includes one or more sensors for providing various aspects of state evaluation for the UE 800. For example, the sensor component 814 may detect an on/off state of the UE 800 and relative locations of the components, for example, the components are a display and a keypad of the UE 800. The sensor component 814 may also detect the position change of the UE 800 or one component of the UE 800, the existence or inexistence of contact between a user and the UE 800, a direction or acceleration/deceleration of the UE 800, and the temperature change of the UE 800. The sensor component 814 may include a proximity sensor configured to detect the existence of nearby objects when there is no any physical contact. The sensor component 814 may further include an optical sensor, such as a CMOS or CCD image sensor, used in imaging applications. In some embodiments, the sensor component 814 may further include an acceleration sensor, a gyroscope sensor, a magnetic sensor, a pressure sensor or a temperature sensor.

The communication component 816 is configured to facilitate wired or wireless communication between the UE 800 and other devices. The UE 800 may be accessed to a wireless network based on a communication standard, such as WiFi, 2G or 3G, or combinations thereof. In an exemplary embodiment, the communication component 816 receives a broadcast signal or broadcast-related information from an external broadcast management system through a broadcast channel. In an exemplary embodiment, the communication component 816 further includes a near field communication (NFC) module to promote short-range communication. For example, the NFC module may be implemented on the basis of a radio frequency identification (RFID) technology, an infrared data association (IrDA) technology, an ultra-wide band (UWB) technology, a Bluetooth (BT) technology, and other technologies.

In an embodiment, the UE 800 may be implemented by one or more application specific integrated circuits (ASIC), digital signal processors (DSP), digital signal processing devices (DSPD), programmable logic devices (PLD), field-programmable gate arrays (FPGA), controllers, micro-controllers, microprocessors or other electronic elements, and is used for executing the above-mentioned method.

In an embodiment, further provided is a non-temporary computer-readable storage medium including instructions, such as a memory 804 including instructions, and the above-mentioned instructions may be executed by the processor 820 of the UE 800 so as to generate the above-mentioned method. For example, the non-temporary computer-readable storage medium may be an ROM, a random access memory (RAM), a CD-ROM, a cassette, a floppy disk, an optical data storage device, etc.

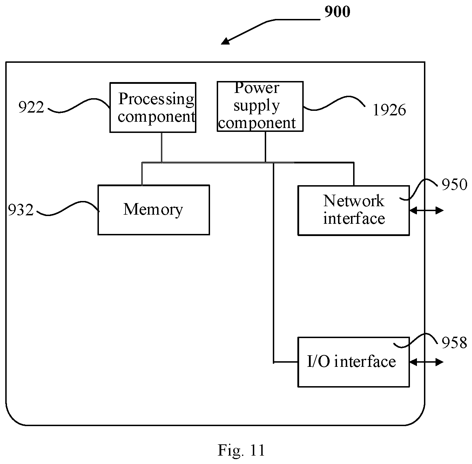

As shown in FIG 11, an embodiment of the present disclosure shows a structure of a communication device. For example, the communication device 900 may be provided as a network side device. The communication device may be the aforementioned first network device and/or the second network device.

Refer to FIG 11, the communication device 900 includes a processing component 922 which further includes one or more processors and a memory resource represented by a memory 932 and used for storing instructions, such as applications, which may be executed by the processing component 922. The applications stored in the memory 932 may include one or more modules with each corresponding to a set of instructions. In addition, the processing component 922 is configured to execute the instructions so that the aforementioned any method, such as any one of methods shown in FIG 2 to FIG 7, applied to the first network device is executed.

The communication device 900 may further include a power supply component 926 configured to execute power supply management for the communication device 900, a wired or wireless network interface 950 configured to connect the communication device 900 to a network, and an input/output (I/O) interface 958. The communication device 900 may be based on an operating system, such as Windows Server TM, Mac OS XTM, UnixTM, LinuxTM, FreeBSDTM or the like, stored in the memory 932.

Those skilled in the art will readily envision other implementation solutions of the present disclosure after considering the specification and putting the present disclosure disclosed herein into practice. The present disclosure aims at covering any variations, purposes or adaptive changes of the present disclosure, and these variations, purposes or adaptive changes conform to general principles of the present disclosure and include common general knowledge or conventional technical means in the undisclosed technical field of the present disclosure. The specification and the embodiments are only regarded to be exemplary, and the true scope and spirits of the present disclosure are appointed by the following claims.

It should be understood that the present disclosure is not limited to precise structures which have been described above and shown in the accompanying drawings, and various modifications and alterations may be made without departing from the scope thereof. The scope of the present disclosure is only limited by the appended claims.

## Claims

1. A signal processing method, executed by a user equipment (UE) comprising a first transceiver and a second transceiver, the method comprising:
in a case that the first transceiver is deactivated, monitoring a synchronization signal through the second transceiver, wherein the synchronization signal carries an area identification (ID).

2. The method according to claim 1, wherein in a case that the first transceiver is deactivated, monitoring the synchronization signal through the second transceiver comprises:
in a case that the first transceiver is deactivated, periodically monitoring the synchronization signal through the second transceiver according to a synchronization signal configuration.

3. The method according to claim 2, further comprising:
receiving, through the first transceiver, a broadcast message comprising the synchronization signal configuration.

4. The method according to any one of claims 1 to 3, further comprising:
in response to a monitoring result of the synchronization signal satisfying a wake up condition, activating the first transceiver.

5. The method according to claim 4, wherein the monitoring result of the synchronization signal satisfying the wake up condition comprises at least one of:
a change of the area ID carried in the synchronization signal being monitored;
the synchronization signal being not monitored at a time of monitoring the synchronization signal; or
a number of synchronization signals that are not monitored continuously reaching a number threshold.

6. The method according to claim 4 or 5, further comprising:
after the first transceiver is activated, monitoring a synchronization signal block (SSB) through the first transceiver.

7. The method according to any one of claims 1 to 6, wherein one or more cells exist in an area indicated by the area ID.

8. The method according to any one of claims 1 to 7, wherein
synchronization signal configurations of a plurality of cells in an area indicated by a same area ID are the same.

9. The method according to claim 1, further comprising:
in a case that the first transceiver is deactivated, monitoring a power saving signal through the second transceiver.

10. The method according to claim 9, wherein
a frequency domain position of the power saving signal is the same as a frequency domain position of the synchronization signal;
and/or,
a time domain position of the power saving signal is different from a time domain position of the synchronization signal.

11. The method according to claim 9, further comprising:
in response to time domain positions of the power saving signal and the synchronization signal overlapping, determining that the synchronization signal is monitored through the second transceiver.

12. The method according to claim 9, further comprising:
in response to time domain positions of the power saving signal and the synchronization signal overlapping, determining that the power saving signal is monitored through the second transceiver.

13. The method according to any one of claims 9 to 12, further comprising:
receiving a broadcast message of a power saving signal configuration through the first transceiver.

14. The method according to claim 13, wherein power saving signal configurations of a plurality of cells in an area indicated by a same area ID are the same.

15. The method according to any one of claims 1 to 14, wherein
in a multi-beam scenario, different beams in a same cycle send the synchronization signals in different time periods.

16. A signal processing method, executed by a first network device, and the method comprising:
sending a synchronization signal, wherein the synchronization signal carries an area identification (ID); and the synchronization signal is monitored by a second transceiver of a user equipment (UE).

17. The method according to claim 15, further comprising:
sending a synchronization signal configuration via a broadcast message.

18. The method according to claim 17, wherein the synchronization signal configuration comprises at least one of:
a cycle of the synchronization signal;
a frequency domain position of the synchronization signal;
a time domain offset of the synchronization signal relative to a reference time; and
for a multi-beam scenario, a time domain offset of synchronization signals transmitted by different beams within a same cycle.

19. The method according to any one of claims 16 to 18, further comprising:
sending a power saving signal; wherein the power saving signal is used for waking up a first transceiver of the UE after the second transceiver of the UE monitors the power saving signal.

20. The method according to claim 19, further comprising:
sending a power saving signal configuration via a broadcast message.

21. The method according to claim 19 or 230, wherein
a frequency domain position of the power saving signal is the same as a frequency domain position of the synchronization signal;
and/or,
a time domain position of the power saving signal is different from a time domain position of the synchronization signal.

22. The method according to any one of claims 16 to 21, wherein one or more cells exist in an area indicated by the area ID.

23. The method according to any one of claims 16 to 22, wherein
synchronization signal configurations of a plurality of cells in an area indicated by a same area ID are the same.

24. The method according to any one of claims 19 to 21, further comprising:
in response to time domain positions of the power saving signal and the synchronization signal overlapping, determining to send the synchronization signal.

25. The method according to any one of claims 19 to 21, further comprising:
in response to time domain positions of the power saving signal and the synchronization signal overlapping, determining to send the power saving signal.

26. The method according to any one of claims 19 to 21 or claims 24 to 25, wherein
power saving signal configurations of a plurality of cells in an area indicated by a same area ID are the same.

27. The method according to any one of claims 16 to 26, further comprising:
negotiating a synchronization signal configuration and/or a power saving signal configuration with a second network device in an area indicated by the area ID.

28. The method according to claim 27, wherein negotiating the synchronization signal configuration and/or the power saving signal configuration with the second network device in the area indicated by the area ID comprises at least one of:
before the first network device broadcasts the synchronization signal configuration, receiving the synchronization signal configuration that has been broadcast by the second network device, and determining the synchronization signal configuration provided by the second network device as the synchronization signal configuration of the first network device;
before the first network device broadcasts the power saving signal configuration, receiving the power saving signal configuration that has been broadcast by the second network device, and determining the power saving signal configuration provided by the second network device as the power saving signal configuration of the first network device;
in response to not receiving the synchronization signal configuration that has been broadcast by the second network device, providing the synchronization signal configuration of the first network device to the second network device; or
in response to not receiving the power saving signal configuration that has been broadcast by the second network device, providing the power saving signal configuration of the first network device to the second network device.

29. A signal processing apparatus, comprising:
a monitoring module configured to, in a case that a first transceiver is deactivated, monitor a synchronization signal through a second transceiver, wherein the synchronization signal carries an area identification (ID).

30. A signal processing apparatus, comprising:
a first sending module configured to send a synchronization signal, wherein the synchronization signal carries an area identification (ID); and the synchronization signal is monitored by a second transceiver of UE.

31. A communication device comprising a processor, a transceiver, a memory, and executable programs stored in the memory and capable of running on the processor, wherein the processor, when executing the executable programs, implements the method provided according to any one of claims 1 to 15 or claims 16 to 28.

32. A computer storage medium having executable programs stored thereon; and a processor, after executing the executable programs, being capable of implementing the method provided according to any one of claims 1 to 15 or claims 16 to 28.
